# EUROPÄISCHE PATENTANMELDUNG

(11) **EP 1 398 147 A1**
(43) Veröffentlichungstag der Anmeldung: **17.03.2004**
(21) Anmeldenummer: 02020632.2
(22) Anmeldetag: 13.09.2002
(51) Int. Cl.: B32B 17/10, C03C 27/12

(54) **Brandschutz-Verglasungseinheit**

(71) Anmelder: Scheuten Glasgroep, 5900 AA Venlo (NL)
(72) Erfinder: Van Oyen, Albert, 5851 Afferden (NL); Villari, Valentino, Dr., 41063 Mönchengladbach (DE)
(74) Vertreter: Jostarndt, Hans-Dieter, Dr. Dipl.-Phys.

(57) **Zusammenfassung**

Die Erfindung betrifft eine Brandschutz-Verglasungseinheit, bestehend aus wenigstens zwei transparenten Substraten (10; 20), die im Abstand zueinander angeordnet sind, wobei sich zwischen den Substraten wenigstens eine transparente Brandschutzschicht (30) befindet.

Die erfindungsgemäße Brandschutz-Verglasungseinheit zeichnet sich dadurch aus, dass sich auf wenigstens einer Seite der Brandschutzschicht (30) eine transparente TiO₂-Schicht (40) befindet, welche den Einfall von UV-Strahlung auf die Brandschutzschicht (30) reduziert.

## Beschreibung

Die Erfindung betrifft eine Brandschutz-Verglasungseinheit, bestehend aus wenigstens zwei transparenten Substraten, die im Abstand zueinander angeordnet sind, wobei sich zwischen den Substraten wenigstens eine transparente Brandschutzschicht befindet.

Um transparente Verglasungseinheiten als Brandschutzverglasungen auszuführen, ist es bekannt, Verbundgläser zu verwenden, die wenigstens eine transparente Brandschutzschicht aufweisen. Die Wirkung einer solchen Brandschutzschicht kann beispielsweise darin bestehen, dass sie im Brandfall zu einem sich verfestigenden Schaum aufbläht, der dadurch ein Hitzeschild gegen die auftreffende Wärme bildet. Ein Großteil der bekannten Brandschutzsysteme weist jedoch den Nachteil auf, dass die verwendeten Brandschutzschichten nicht UV-stabil sind. Durch den Einfall von Sonnenlicht tritt daher bei längeren Standzeiten eine Trübung der Brandschutzschicht ein, die das Erscheinungsbild der Verglasung erheblich beeinträchtigt. Dies ist vor allem bei der Verwendung von Brandschutzverglasungen in Wohn-, Arbeits- und Lebensbereichen nachteilig, da dort das optische Erscheinungsbild von Glasscheiben von großer Bedeutung ist.

Um die UV-Empfindlichkeit von Brandschutzschichten zu verringern, ist es bekannt, bei der Herstellung der Schichten unterschiedliche Zusatzstoffe zu verwenden. Beispielsweise schlägt die Deutsche Offenlegungsschrift DE 44 35 841 die Verwendung von Kali-Wasserglas als Zumischungsbestandteil einer Brandschutzzwischenschicht zwischen zwei Glasscheiben vor. Dabei ist der Zumischungsbestandteil aus Kali-Wasserglas massemäßig so gewählt, dass, abhängig von den Einsatzbedingungen, eine störende Empfindlichkeit gegen ultraviolettes Licht nicht mehr bestehen soll. Die Hauptbestandteile der beschriebenen Brandschutzschicht sind Natron-Wasserglas und Wasser, während organische Zusatzstoffe in Form von mehrwertigen Alkoholen und/oder Zucker möglichst kleine Restbestandteile darstellen.

Der Nachteil stabilisierter Schutzschichten besteht darin, dass die Herstellung von Brandschutzschichten durch die jeweiligen Verfahren stets mit erhöhtem Aufwand verbunden ist. Der erforderliche Bestandteil an Kali-Wasserglas muss beispielsweise genau bestimmt und auf geänderte Zusammensetzungen der Schicht angepasst werden. Ferner lassen sich die Verfahren jeweils nur für eine Art von Brandschutzschicht einsetzen, während für andere Formen ein Bedarf nach angepassten Zumischungen oder sogar anderen Lösungen besteht.

Aus der Internationalen Patentanmeldung WO 99/35102 und der korrespondierenden Japanischen Patentanmeldung JP 111 99 278 ist eine UV-absorbierende Brandschutzverglasung bekannt, bei der sich vor einer im Brandfall aufschäumenden Brandschutzschicht eine UV-absorbierende Schicht befindet, die Amidverbindungen einer Aminosilanverbindung aufweist, welche mit einer UV-absorbierenden Verbindung reagieren. Dieses Verfahren eignet sich zwar für unterschiedliche Brandschutzschichten, ist aber mit hohem Aufwand verbunden.

Aufgabe der Erfindung ist es daher, eine einfach herzustellende Brandschutzverglasung mit wenigstens einer transparenten Brandschutzschicht bereitzustellen, welche eine hohe UV-Stabilität aufweist.

Erfindungsgemäß wird diese Aufgabe dadurch gelöst, dass eine Brandschutz-Verglasungseinheit, bestehend aus wenigstens zwei transparenten Substraten, die im Abstand zueinander angeordnet sind, wobei sich zwischen den Substraten wenigstens eine Brandschutzschicht befindet, so ausgeführt wird, dass sich auf wenigstens einer Seite der Brandschutzschicht eine transparente TiO₂-Schicht befindet, welche den Einfall von UV-Strahlung auf die Brandschutzschicht reduziert.

Um die UV-Strahlung des einfallenden Sonnenlichts zu absorbieren und für die dahinter liegende Brandschutzschicht zu reduzieren, befindet sich die TiO₂-Schicht zweckmäßigerweise auf der nach außen gerichteten Seite der Brandschutzschicht.

Es hat sich als zweckmäßig erweisen, die Brandschutz-Verglasungseinheit so auszugestalten, dass die Brandschutzschicht in Wellenlängenbereichen von 800 nm bis 1400 nm eine Absorption von mindestens 70% aufweist. Hierdurch wird ein Wärmedurchtritt in zu schützende Raumbereiche vermieden.

Ferner ist es vorteilhaft, die Brandschutz-Verglasungseinheit so zu gestalten, dass die TiO₂-Schicht in Wellenlängenbereichen von 320 nm bis 480 nm eine Absorption zwischen 3% und 15% aufweist. Hierdurch wird eine Beschädigung der Brandschutzschicht durch UV-Strahlung weitgehend vermieden.

Zur weiteren Erhöhung der Beständigkeit der in der Brandschutz-Verglasungseinheit enthaltenen Brandschutzschicht ist es zweckmäßig, die TiO₂-Schicht so auszugestalten, dass sie in Wellenlängenbereichen von 320 nm bis 480 nm eine Reflektion von mindestens 40% aufweist.

Eine besonders bevorzugte Ausführungsform der Brandschutz-Verglasungseinheit zeichnet sich dadurch aus, dass die TiO₂-Schicht in Wellenlängenbereichen von 320 nm bis 480 nm eine Reflektion von 40% bis 60% aufweist.

In einem vorteilhaften Ausführungsbeispiel der Erfindung befindet sich die UV-absorbierende TiO₂-Schicht auf der Oberfläche einer nach außen gerichteten Glasscheibe der Verglasungseinheit. In einem weiteren besonders bevorzugten Ausführungsbeispiel befindet sich die UV-absorbierende TiO₂-Schicht zwischen der inneren Oberfläche der nach außen gerichteten Glasscheibe und der Brandschutzschicht. Die Brandschutz-Verglasungseinheit kann neben wenigstens zwei auf Abstand positionierten Scheiben und der Brandschutzschicht weitere Funktionsschichten aufweisen. In Frage kommen dabei beispielsweise fluordotierte SnO₂-Schichten zur IR-Reflektion. Im Falle mehrerer funktionaler Schichten zwischen Außenscheibe und Brandschutzschicht, kann die TiO₂-Schicht auch zwischen den verschiedenen Schichten eingesetzt werden. Die Anordnung der Schicht wird zweckmäßigerweise so gewählt, dass die Funktion der umliegenden Schichten durch die Reduzierung der einfallenden UV-Strahlung nicht beeinträchtigt wird.

Schichten mit TiO₂-Bestandteilen werden herkömmlicherweise dazu verwendet, auf Glasoberflächen einen Autokatalyseeffekt zu erzeugen. Dieser Effekt dient zum Schutz der Oberfläche gegen Witterungseinflüsse und Verschmutzungen. Die UV-Absorbtionseigenschaften von TiO₂ führen jedoch beim Einsatz in Brandschutzverglasungen zu überraschenden Vorteilen. Zu den Vorteilen zählt insbesondere, dass die erfindungsgemäßen TiO₂-Schichten mit wenigen Verfahrensschritten und durch unterschiedliche Verfahren aufbringbar sind. Die Anordnung der Schicht innerhalb der Brandschutz-Glaseinheit kann ferner den Anforderungen entsprechend gewählt werden. Vorteilhaft ist außerdem, dass die UV-Stabilität unabhängig von der Art der Brandschutzschicht realisiert werden kann. Der erfindungsgemäße Schichtaufbau kann demnach für unterschiedliche Brandschutzschichten eingesetzt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: Ein besonders bevorzugtes Ausführungsbeispiel einer Brandschutz-Glaseinheit mit einer TiO₂-Schicht zwischen einer äußeren Glasscheibe und einer Brandschutzschicht; und
- Fig. 2: ein Ausführungsbeispiel einer Brandschutz-Glaseinheit mit einer TiO₂-Schicht auf der Außenoberfläche einer Glasscheibe.

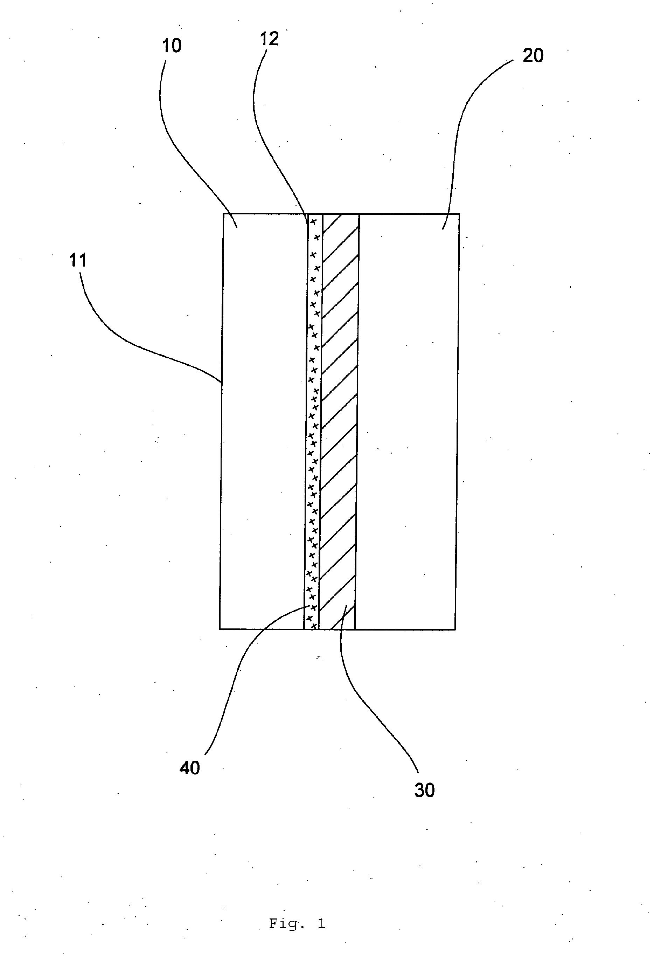

Der Abbildung in Fig. 1 ist ein besonders bevorzugtes Ausführungsbeispiel des erfindungsgemäßen Aufbaus einer Brandschutz-Verglasungseinheit mit TiO₂-Schicht zu entnehmen. Die Brandschutz-Verglasungseinheit besteht aus wenigstens zwei transparenten Glassubstraten (10; 20), die in einem Abstand zueinander positioniert sind, und wenigstens einer ebenfalls transparenten Brandschutzschicht (30), die sich zwischen den Glassubstraten befindet. Bei den verwendeten Glasscheiben kann es sich um übliche Scheiben zur Herstellung von transparenten Brandschutzverglasungen handeln.

Die Brandschutzschicht (30) kann verschiedenartig gebildet werden. Beispielsweise können bekannte Hydrogele zum Einsatz kommen, deren Hauptbestandteil Wasser mit Zumischungen an Salzen und stabilisierenden Polymeren ist. Die stabilisierenden Polymere dienen dabei als Gelbildner. Zur Anwendung können ferner Brandschutzmischungen kommen, die zu Wasserglas gebundenes Wasser, wenigstens ein Cellulose-Derivat und zweckmäßigerweise Konservierungsmittel aufweisen. Das Konservierungsmittel kann beispielsweise aus der Gruppe Kupfersulfat, Kupferacetat, Benzoesäure oder Mischungen davon ausgewählt werden.

Zur Herstellung der Brandschutzschicht können beispielsweise Sol-Gel-Techniken, Gel-Giessharzverfahren und/oder Aufgussverfahren verwendet werden. Bei den Aufgussverfahren kommen beispielsweise wasserhaltige Alkalisilikatlösungen vorzugsweise mit Beimischungen zum Einsatz, die auf eine waagerechte Glasscheibe aufgegossen werden. Das Wasser der Lösung wird durch Trocknungsprozesse entfernt, so dass sich die Schicht zu einer festen Brandschutzschicht verfestigt.

Derartige Brandschutzschichten weisen typischerweise Absorptionen von 4-15% der im Sonnenlicht befindlichen UVA-Strahlung auf. Ab einer Absorption von etwa 4% ist jedoch keine UV-Stabilität mehr gewährleistet. Der erfindungsgemäße Aufbau der Brandschutzverglasung mit einer transparenten TiO₂-Schicht (30) bewirkt eine Reduzierung der einfallenden UV-Strahlung in der Größenordnung von 80%, so dass die von der dahinter liegenden Brandschutzschicht absorbierte UV-Strahlung einen Wert von etwa 4% der gesamten einfallenden UV-Strahlung nicht überschreitet.

In dem in Fig. 1 dargestellten Ausführungsbeispiel befindet sich die TiO₂-Schicht zwischen der äußeren Glasscheibe (10) und der Brandschutzschicht (30). Zwischen diesen beiden Schichten können weitere Funktionsschichten angeordnet sein, die hier nicht dargestellt sind. Beispielsweise können zur zusätzlichen IR-Reflektion fluordotierte SnO₂-Schichten eingesetzt werden. Im Falle mehrerer funktionaler Schichten, kann die TiO₂-Schicht geeignet zwischen verschiedenen Schichten eingesetzt werden. Bei der Wahl des Schichtaufbaus ist zweckmäßigerweise ausschlaggebend, dass die Funktion der Schichten nicht durch die UV-Reduzierung beeinträchtigt wird.

Die Dicke der TiO₂-Schicht liegt in einem besonders bevorzugten Ausführungsbeispiel der Erfindung in der Größenordnung von 10nm bis 75nm. Es hat sich herausgestellt, dass die relevante UV-Protektion bei Schichtdicken von 10nm einsetzt, wobei maximal Schichtdicken von 75nm realisiert werden sollten, da sonst die Transparenz der Glaseinheit zu gering ist. Es hat sich daher zur Optimierung des Aufbaus als zweckmäßig erwiesen, insbesondere Schichtdicken von 20 bis 30nm einzusetzen.

Die TiO₂-Schichten können mit unterschiedlichen Verfahren aufgebracht werden. Beispielsweise kann ein Aufbringen von TiO₂ durch das Verfahren des Magnetsputterns erfolgen, das dabei vorzugsweise reaktiv und von einem keramischen Target durchgeführt wird. Ferner bieten sich Sol-Gelverfahren und CVD-Verfahren an.

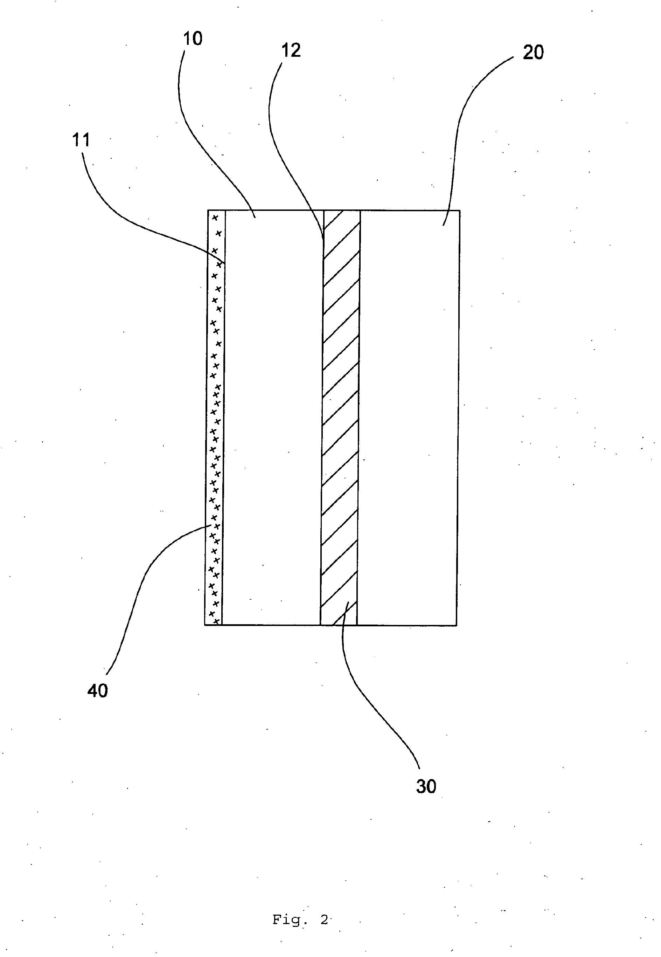

In Fig. 2 ist ein weiteres besonders bevorzugtes Ausführungsbeispiel der Erfindung dargestellt, bei dem sich die transparente TiO₂-Schicht auf der Außenoberfläche der nach außen gerichteten Glasscheibe befindet.

### Bezugszeichenliste:

- 10: Äußere Glasscheibe
- 11: Außenoberfläche der äußeren Glasscheibe
- 12: Innenoberfläche der äußeren Glasscheibe
- 20: Innere Glasscheibe
- 30: Brandschutzschicht
- 40: TiO₂-Schicht

## Patentansprüche

1. Brandschutz-Verglasungseinheit, bestehend aus wenigstens zwei transparenten Substraten (10; 20), die im Abstand zueinander angeordnet sind, wobei sich zwischen den Scheiben eine transparente Brandschutzschicht (30) befindet, **dadurch gekennzeichnet, dass** sich auf wenigstens einer Seite der Brandschutzschicht (30) eine transparente TiO₂-Schicht (40) befindet, welche den Einfall von UV-Strahlung auf die Brandschutzschicht (30) reduziert.

2. Brandschutz-Verglasungseinheit nach Anspruch 1, **dadurch gekennzeichnet, dass** sich die TiO₂-Schicht auf einer Außenoberfläche (11) einer nach außen gerichteten Glasscheibe (10) befindet.

3. Brandschutz- Verglasungseinheit nach einem oder beiden der Ansprüche 1 und 2, **dadurch gekennzeichnet, dass** sich die TiO₂-Schicht zwischen einer Innenoberfläche (12) einer nach außen gerichteten Glasscheibe (10) und der Brandschutzschicht (30) befindet.

4. Brandschutz-Verglasungseinheit nach einem oder mehreren der vorangegangenen Ansprüche, **dadurch gekennzeichnet, dass** die Brandschutz-Verglasungseinheit neben der Brandschutzschicht (30) und der transparenten TiO₂-Schicht (40) weitere Funktionsschichten aufweist.

5. Brandschutz-Verglasungseinheit nach einem oder mehreren der vorangegangenen Ansprüche, **dadurch gekennzeichnet, dass** die Schichtdicke der TiO₂-Schicht (40) in der Größenordnung von 10nm bis 75nm liegt.

6. Brandschutz-Verglasungseinheit nach einem oder mehreren der vorangegangenen Ansprüche, **dadurch gekennzeichnet, dass** die TiO₂-Schicht (40) mittels Magnetronsputtern, Sol-Gel-Verfahren oder CVD-Verfahren aufgebracht wird.

7. Brandschutz-Verglasungseinheit nach einem oder mehreren der vorangegangenen Ansprüche, **dadurch gekennzeichnet, dass** die Brandschutzschicht in Wellenlängenbereichen von 800 nm bis 1400 nm eine Absorption von mindestens 70% aufweist.

8. Brandschutz-Verglasungseinheit nach einem oder mehreren der vorangegangenen Ansprüche, **dadurch gekennzeichnet, dass** die TiO₂-Schicht in Wellenlängenbereichen von 320 nm bis 480 nm eine Absorption zwischen 3% und 15% aufweist.

9. Brandschutz-Verglasungseinheit nach einem oder mehreren der vorangegangenen Ansprüche, **dadurch gekennzeichnet, dass** die TiO₂-Schicht in Wellenlängenbereichen von 320 nm bis 480 nm eine Reflektion von mindestens 40% aufweist.

10. Brandschutz-Verglasungseinheit nach Anspruch 9, **dadurch gekennzeichnet, dass** die TiO₂-Schicht in Wellenlängenbereichen von 320 nm bis 480 nm eine Reflektion von 40% bis 60% aufweist.
